# EUROPEAN PATENT APPLICATION

(11) **EP 4 821 357 A1**
(43) Date of publication of application: **14.10.2026**
(21) Application number: 26168258.7
(22) Date of filing: 26.03.2026
(51) Int. Cl.: A01M 7/00, A01C 23/04, F16L 37/00, A01C 15/00

(54) **COMMODITY TRANSFER SYSTEM AND METHOD OF OPERATING SUCH**

(30) Priority: 08.04.2025 US 202563785162 P; 13.03.2026 US 202619566130
(71) Applicant: Deere & Company, Moline, IL 61265 (US)
(72) Inventor: JOHNSON, MICAH E, 68163 Mannheim (DE); FISCHER, GAGE D, 68163 Mannheim (DE); LARSEN, LUCAS B, 68163 Mannheim (DE); THOMPSON, AUSTIN N, 68163 Mannheim (DE); MILLER, MICHAEL M, 68163 Mannheim (DE)
(74) Representative: Reichert, Christian

(57) **Abstract**

A commodity transfer system (100) for an agricultural vehicle (10, 50) is configured for a transfer of a commodity for an agricultural operation performed by the agricultural vehicle, the commodity transfer system comprising a first connector assembly (102) having: a first transfer conduit assembly (108) comprising a first connector (106) in fluid communication with a first valve (109); a support assembly (116) configured to support the first transfer conduit assembly and couple the first connector assembly to the agricultural vehicle; and a flipper arm assembly (138) comprising a rock shaft (144), a first flipper arm (162), a second flipper arm (164), and an arm actuator (140), the rock shaft being rotatably coupled to the support assembly for selective rotation by the arm actuator, the first and second flipper arms each having a first end (166) and a second end (168) and defining an opening (171) therebetween, a lateral width of the opening converging in a direction from the first end to the second end, the second end being in closer proximity to the first connector than the first end, the first and second flipper arms each being rotatably displaceable with the selective rotation of the rock shaft, wherein at least one of the first and second flipper arms includes a catch (176). Furthermore, a method of operating such commodity transfer system (100) is disclosed.

## Description

### FIELD

The present disclosure generally relates to agricultural vehicles that can dispense commodities within a field and, more specifically, to commodity transfer systems for automated tendering of commodities to agricultural vehicles.

### BACKGROUND

With respect to at least agricultural operations, a range of materials, also referred to as commodities, can be conveyed between vehicles. For example, commodities such as fertilizer, seed, and chemicals, among others, can be transported into fields, among other locations, using various tender vehicles. The commodities can then subsequently be transferred to another agricultural vehicle that can apply the commodity to the field, including to associated crops within the field.

### SUMMARY

Implementations of the subject disclosure can include a commodity transfer system for an agricultural vehicle, the commodity transfer system being configured for a transfer of a commodity for an agricultural operation performed by the agricultural vehicle. The commodity transfer system can include a first connector assembly that can comprise a first transfer conduit assembly comprising a first connector and a first valve, the first connector being in fluid communication with the first valve. Additionally, the first connector assembly can also include a support assembly configured to support the first transfer conduit assembly and couple the first connector assembly to the agricultural vehicle, and a flipper arm assembly comprising a rock shaft, a first flipper arm, a second flipper arm, and an arm actuator. The rock shaft can be rotatably coupled to the support assembly for selective rotation of the rock shaft in response to an actuation of the arm actuator. The first and second flipper arms can each have a first end and a second end and define an opening therebetween. A lateral width of the opening can converge in a direction from the first end to the second end, the second end being in closer proximity to the first connector than the first end. Additionally, the first and second flipper arms can each be rotatably displaceable with the selective rotation of the rock shaft, and at least one of the first and second flipper arms can include a catch.

In one example of the implementation, the rock shaft can be rotatably coupled to the support assembly for rotation of the rock shaft about a longitudinal axis of the rock shaft that extends in a direction that is perpendicular to a central longitudinal axis of the first connector.

Additionally, the rock shaft can be coupled around a front end of the support assembly. In another example of the implementation, the first transfer conduit assembly can further comprise an inflatable seal body that can be positioned about at least a portion of the first connector. Further, the arm actuator can be positioned beneath a base portion of the support assembly. According to another example of the implementation, the support assembly can be configured to be coupled to a ladder of the agricultural vehicle. Additionally, the arm actuator can be positioned within the support assembly. In another example of the implementation, the first and second flipper arms can each include a catch and can further comprise a first section, a second section, and a third section, the first section positioned between the first end and the second section, the second section positioned between the first section and the catch, and the third section positioned between the catch and the second end. Additionally, the first section can be angularly offset from the second section in both a vertical direction and a lateral direction.

According to another example of the implementation, the commodity transfer system can also include a second connector assembly that can comprise a second transfer conduit assembly comprising a second connector and a second valve, the second connector being in fluid communication with the second valve and configured for selective mating engagement with the first connector. Additionally, the second connector assembly can include a wing assembly coupled to the second transfer conduit assembly and configured for selective sliding engagement with the first and second flipper arms. The flipper arm assembly can be configured to be rotatably displaced from a second position at which a portion of the first and second flipper arms are vertically beneath at least a portion of the wing assembly, to a first position at which the second connector is matingly coupled to the first connector. The wing assembly can also be configured to be at least downwardly displaced along the first and second flipper arms, until the wing assembly engages the catch, as the flipper arm assembly is rotatably displaced toward the first position.

Additionally, another implementation of the subject disclosure provides a method that can include rotatably displacing, when a first flipper arm and a second flipper arm of a first connector assembly are positioned beneath at least a portion of a wing assembly of a second connector assembly, the first and second flipper arms in a first direction at least into engagement with the wing assembly. Additionally, with the first and second flipper arms engaged with the wing assembly, the second connector assembly can be displaced away from a home position as the first and second flipper arms are rotatably displaced in the first direction. The method can also include laterally adjusting, by a downward displacement of the second connector assembly along the first and second flipper arms during the rotatable displacement of the first and second flipper arms in the first direction, an alignment between a first connector of the first connector assembly and a second connector of the second connector assembly. Further, as the first and second flipper arms continue being rotatably displaced in the first direction, the wing assembly can be caught in a catch of at least one of the first and second flipper arms. The method can further include pushing or pulling, while the wing assembly is caught in the catch, the second connector into a mating engagement with the first connector.

In one example of the implementation, the method can further comprise lifting the second connector assembly as the first and second flipper arms are rotatably displaced in the first direction and while the wing assembly is caught in the catch. Additionally, the method can also include opening a first valve of the first connector assembly and opening a second valve of the second connector assembly after the second connector is in the mating engagement with the first connector. In another example of the implementation, laterally adjusting the alignment can further comprise laterally displacing, by an engagement of the wing assembly with the first and second flipper arms, the second connector assembly toward at least a central axis of an opening between the first and second flipper arms. Further, laterally adjusting the alignment can further comprise a sliding engagement between the wing assembly and the first and second flipper arms. Additionally, in another example of the implementation, laterally adjusting the alignment can further comprise a rolling engagement between the wing assembly and the first and second flipper arms.

### BRIEF DESCRIPTION OF THE DRAWINGS

Figure 1 illustrates a perspective view of one example implementation of an agricultural sprayer including a plurality of drop-down applicator assemblies coupled along a rear-mounted support boom of the agricultural sprayer.
Figure 2 illustrates a perspective view of another example implementation of an agricultural sprayer including a plurality of drop-down applicator assemblies coupled along a front-mounted support boom of the agricultural sprayer.
Figures 3 and 4 illustrate top perspective views of an exemplary first commodity transfer assembly.
Figures 5 and 6 illustrate first side and bottom side perspective views, respectively, of an exemplary first connector assembly of the first commodity transfer assembly shown in Figure 3.
Figure 7 illustrates a front perspective view of the exemplary first connector assembly coupled to a retractable or foldable ladder of an agricultural vehicle.
Figure 8 illustrates a rear perspective view of at least a portion of a second exemplary commodity transfer assembly.
Figure 9 illustrates a front perspective view of an exemplary first connector assembly for the commodity transfer assembly shown in Figure 8.
Figure 10 illustrates a front side perspective view of the first connector assembly shown in

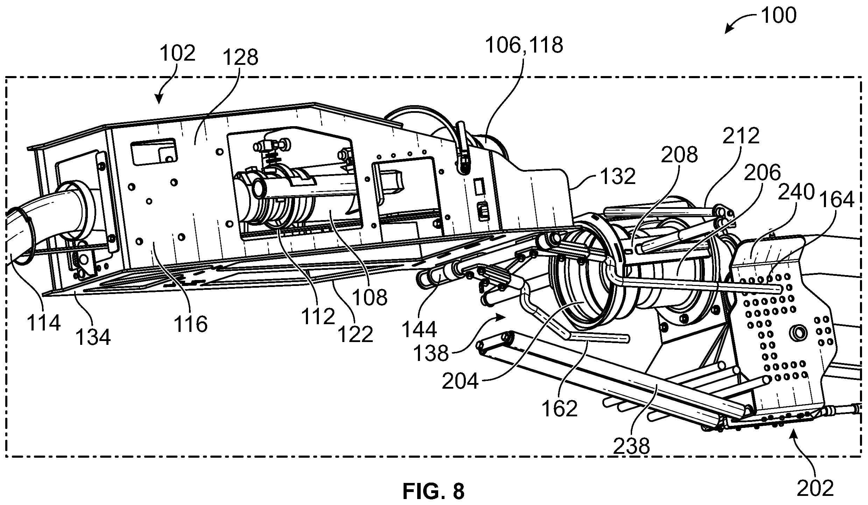

Figure 8 coupled to a chassis of an agricultural vehicle.

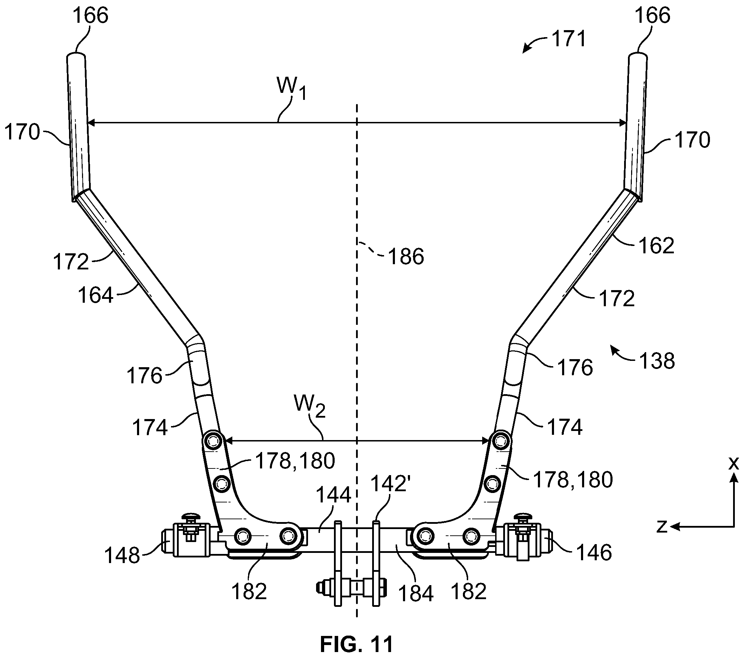

Figure 11 illustrates the front view of an exemplary arm assembly for the illustrated first connector assemblies.

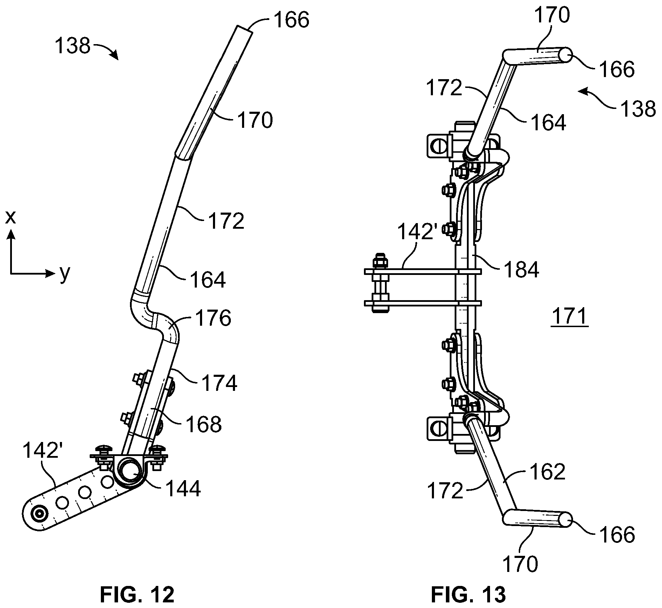

Figures 12 and 13 illustrate side and top views, respectively, of the arm assembly shown in Figure 11.

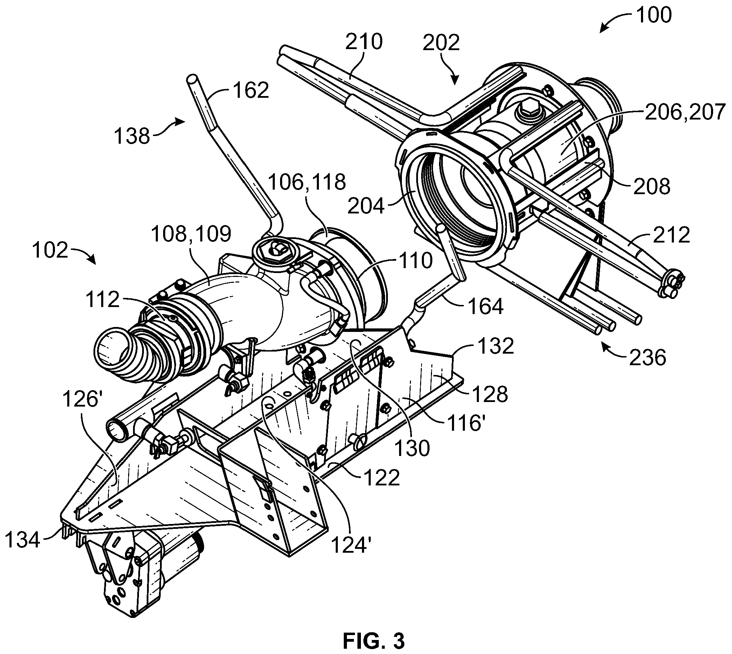

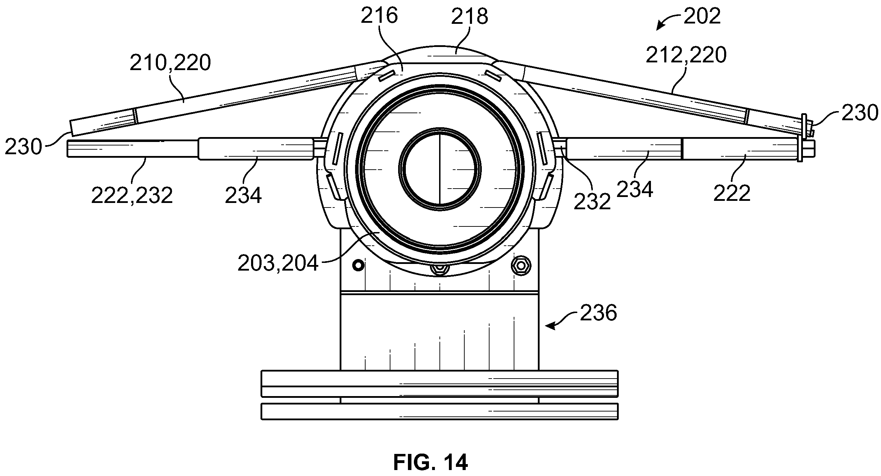

Figure 14 illustrates a front view of an exemplary second connector assembly for the commodity transfer assemblies shown in at least Figures 3 and 8.

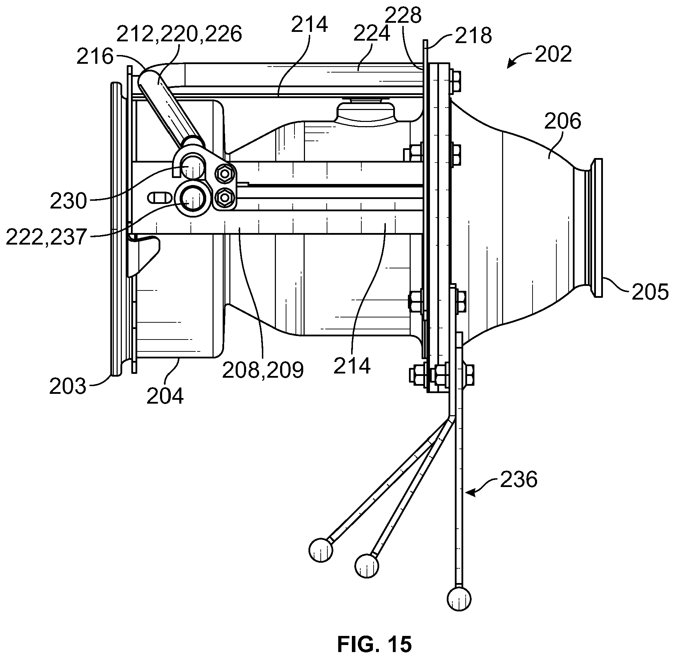

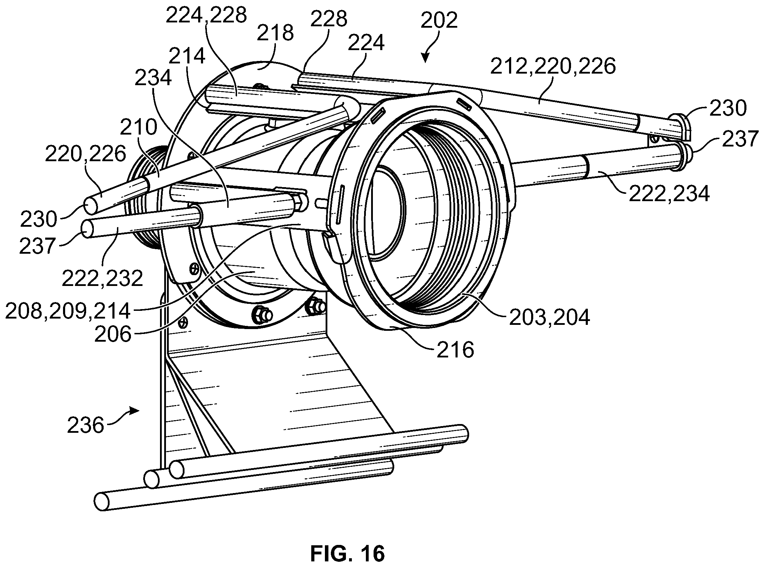

Figures 15 and 16 illustrate side and front side perspective views, respectively, of the second connector assembly shown in Figure 14.

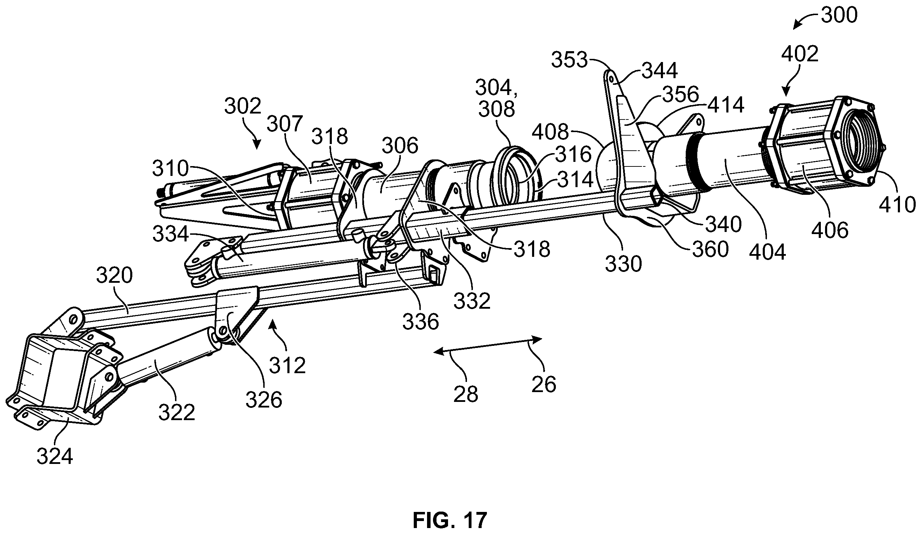

Figure 17 illustrates a perspective view of another exemplary commodity transfer assembly.

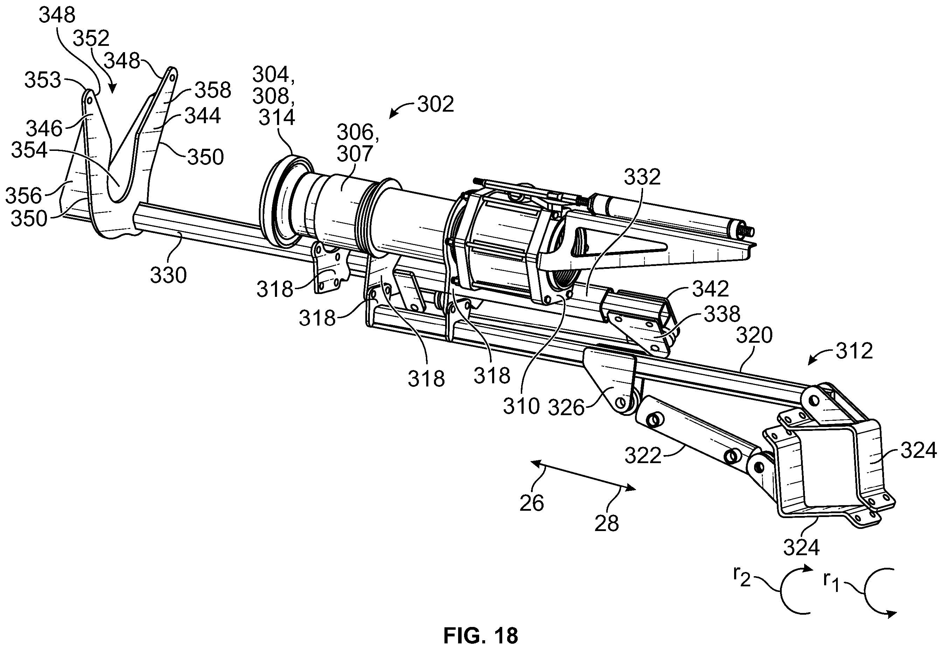

Figure 18 illustrates a rear side perspective view of an exemplary first connector assembly for the commodity transfer assembly shown in Figure 17.

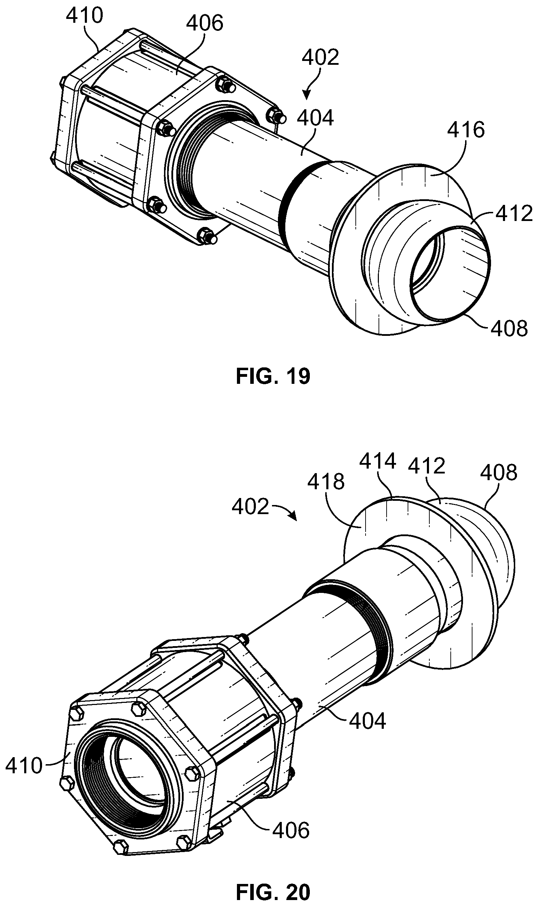

Figures 19 and 20 illustrate front and rear side perspective views, respectively, of an exemplary second connector assembly for the commodity transfer assembly shown in Figure 17.

Corresponding reference numerals are used to indicate corresponding parts throughout the several views.

### DETAILED DESCRIPTION

While the concepts of the present disclosure are susceptible to various modifications and alternative forms, specific implementations thereof have been shown by way of example in the drawings and will be described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one implementation," "an implementation," "an illustrative implementation," etc., indicate that the implementation described may include a particular feature, structure, or characteristic, but every implementation may or may not necessarily include that particular feature, structure, or characteristic. Moreover, such phrases are not necessarily referring to the same implementation. Further, when a particular feature, structure, or characteristic is described in connection with an implementation, it is submitted that it is within the knowledge of one skilled in the art to effect such feature, structure, or characteristic in connection with other implementations whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

In the drawings, some structural or method features can be shown in specific arrangements or orderings. However, it should be appreciated that such specific arrangements and orderings may not be required. Rather, in some implementations, such features can be arranged in a different manner or order than shown in the illustrative figures. Additionally, the inclusion of a structural or method feature in a particular figure is not meant to imply that such feature is required in all implementations and, in some implementations, may not be included or can be combined with other features.

Operators of at least certain agricultural vehicles, including, but not limited to, implements, or implements integrated with or towed by agricultural vehicles, are often unable to transfer or tender commodities from a tendering vehicle to the agricultural vehicle without an operator exiting the cab and manually connecting at least a portion of the tendering system to the agricultural vehicle. However, such manual operations, including connecting and disconnecting the tendering system to the agricultural vehicle, can be time-consuming. Further, such operations can involve the lifting and handling of heavy hoses, which can cause strain on the body of the operator, as well as subject the operator to exposure to potentially dangerous chemicals. Additionally, errors can occur in the chemical recipe when operators manually fill the agricultural vehicle, including sprayers, with the commodity.

Implementations of the subject disclosure provide a commodity transfer assembly having a first connector assembly coupled to one of an agricultural vehicle and a tendering vehicle, and a mating second connector assembly coupled to the other of the agricultural vehicle and the tendering vehicle. According to certain implementations, the second connector assembly can have several degrees of freedom, including, for example, with respect to one or more, if not all, of yaw, pitch, fore-aft, horizontal, and vertical degrees of freedom. The first connector assembly can include a support assembly configured for either or both pivotal and linear motion, and can include a flipper arm assembly that can be rigidly connected to a rock shaft. The flipper arm assembly can include a pair of flipper arms that can rotate with the flipper arm assembly about a fixed point, such as, for example, where the rock shaft is coupled to the support structure of the first connector assembly. The flipper arms can generally define a V-shaped opening between the flipper arms that is configured to accommodate and correct lateral misalignment between mating first and second connectors of the first connector assembly and second connector assembly, respectively.

The second connector assembly can include wing assemblies that can be rigidly coupled to, and outwardly extend from, opposing sides of the second connector assembly. At least a portion of the wing assemblies that are to be at least initially engaged by the corresponding flipper arms during a coupling process, namely a lower wing of each of the wing assemblies, can outwardly extend in a direction that is generally perpendicular to the lateral direction of movement while coupling of the first and second connector assemblies.

In a pre-coupling state, the flipper arm assembly, and thus the flipper arms, can be lowered, including rotated, from a first position to a second position, at least portions of the flipper arms when the flipper arm assembly is at the second position being vertically lower than the lower wing of each of the wing assemblies. The agricultural vehicle can then propel forward toward the tendering vehicle and/or the tendering vehicle can propel rearward toward the agricultural vehicle such that at least a portion of the flipper arms can be positioned below the adjacent lower wing. According to certain implementations, with the forward/rearward motion of either or both the agricultural vehicle and tendering vehicle stopped, the flipper arm assembly, and thus flipper arms, can be rotated upward back toward the first position such that the flipper arms contact the lower wings of the wing assemblies. Alternatively, according to other implementations, the agricultural vehicle and tendering vehicle can be both moving generally in unison during the transferring of the commodity.

As the flipper arm assembly continues to be rotated upwardly back toward the first position, the flipper arms are configured such that gravity can assist in facilitating a sliding displacement of the lower wings of the wing assemblies downwardly along adjacent portions of the flipper arms. Further, as the second connector is generally downwardly displaced along the rotating flipper arms with the help of gravity, the second connector assembly can also be laterally displaced by the above-mentioned converging configuration of the flipper arms so as to assist in aligning a second connector of the second connector assembly with the mating first connector of the first connector assembly.

Either or both of the flipper arms can include a catch configured to limit the distance the second connector assembly can slide down the flipper arms. Moreover, such a catch can be positioned to prevent the second connector assembly from sliding completely down the flipper arms. The catch can further be configured, including located along the flipper arm(s), such that the downwardly sliding displacement of the second connector assembly along the flipper arms stops at a location at which the position of the second connector assembly relative to the first connector assembly will not create an interference with the continued rotational displacement of the second connector assembly as the flipper arm assembly continues to be upwardly rotated about the rock shaft toward the first position.

Either or both of the flipper arms can also be configured to utilize gravity to at least temporarily maintain the second connector assembly in the catch and as the flipper arm assembly, and thus the second connector assembly engaged with the flipper arms of the flipper arm assembly, continued to be rotated about the rock shaft toward the first position. As the flipper arm assembly approaches the first position, the catch can further be configured to slightly lift or raise the second connector assembly and also pull the second connector of the second connector assembly into mating engagement with the mating first connector of the first connector assembly. According to certain implementations, such mating engagement can involve a male connector of either the first or second connector being received by a female connector of the other of the first and second connectors. With the first connector received within the second connector, or vice versa, a seal body of at least one of the connectors, such as, for example, the first connector, can be inflated to form a seal therebetween the first and second connectors.

The first and second connector assemblies can also each include a valve, such as, for example, a poppet valve, ball valve, or plunger valve, among other types of valves, that can when the first and second connector assemblies are coupled together, be selectively opened to permit a transfer, including a flow, of commodity from one of the first connector assembly and the second connector assembly to the other of the first connector assembly and the second connector assembly.

Upon completion of the transfer of the commodity, the valves of the first and second connector assemblies can be closed, and, to the extent inflated, the seal body can be deflated. The flipper arm assembly can then again be rotatably lowered away from the first position and toward the second position such that the flipper arms of the flipper arm assembly do not impede the lateral decoupling of the second connector of the second connector assembly from the first connector of the first connector assembly, or vice versa. Optionally, according to certain implementations, the flipper arm assembly can be configured such that during decoupling, the flipper arm assembly can engage the wing assemblies, including, for example, via a hook, that can at least linearly push or pull the second connector of the second connector assembly from the first connector of the first connector assembly. Additionally, or alternatively, the decoupling of the second connector of the second connector assembly from the first connector of the first connector assembly can be facilitated, when the flipper assembly is in the second position, by the agricultural vehicle being propelled away from the tendering vehicle, or vice versa.

The commodity transfer system of the subject disclosure therefore can provide a coupling process and system for the transfer of commodity between a stationary commodity line and a movable unit, such as, for example, an agricultural vehicle, including a sprayer, that can be used in agricultural applications. The commodity transfer system can reduce, if not eliminate, the need for manual intervention at least with respect to coupling the agricultural vehicle for a transfer of commodity to the agricultural vehicle, thereby increasing efficiency and reducing operator exposure to potentially hazardous, or hazardous levels, of commodities, including, for example, fluids and chemicals.

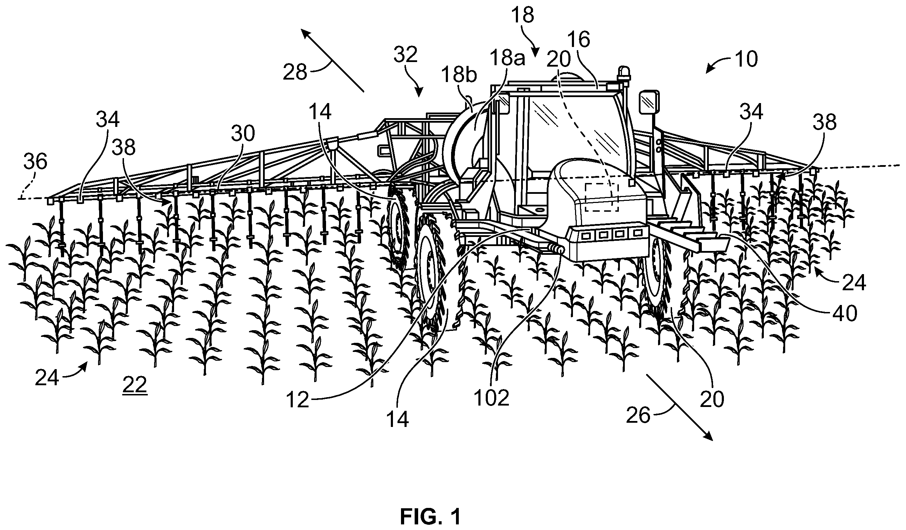

Referring to Figure 1 of the present disclosure, an agricultural vehicle (e.g., an agricultural sprayer 10) is shown including a chassis 12 having a plurality of traction members such as wheels 14 to support a cab 16, one or more product tanks 18, and a power unit 20 (e.g., an engine, transmission, etc.) above an agricultural surface or ground 22. In this illustrated implementation, the ground 22 can be that of a crop field. The product tanks 18 can be configured to store agricultural product (e.g., liquid fertilizer, liquid pesticide, liquid fungicide, dry/solid forms of nutrients, dry/solid forms of protection products, agricultural seeds, etc.) to be distributed onto crops 24 growing from the ground 22 or directly onto the ground 22. The power unit 20 can provide mechanical, electrical, and hydraulic power to components of the sprayer 10. For example, the power unit 20 can at least drive one of the wheels 14 to move the sprayer 10 across the ground 22 in a forward direction 26 or a rearward direction 28. The power unit 20 can also operably drive a delivery device (e.g., a pump) to dispense the agricultural product within the product tanks 18 onto the ground 22. In other implementations, the traction members can be continuous tracks operable to move the sprayer 10 relative to the ground 22. The sprayer 10 can include a spray boom 30 coupled to the chassis 12 behind one or more product tanks 18a, 18b (generally referred to as product tanks 18) and the cab 16. In this implementation, the spray boom 30 is a rear-mounted spray boom positioned behind the cab 16 and product tanks 18. A hydraulic assembly 32 (e.g., hydraulic cylinders) can be coupled to the chassis 12 and the support boom 30 and is operable to raise and lower the support boom 30 relative to the chassis 12 and the ground 22. Spray nozzles 34 can be positioned along a longitudinal axis 36 of the support boom 30 with each spray nozzle 34 fluidly coupled to at least one or more of the product tanks 18. The spray nozzles 34 can be operable to dispense/spray the agricultural product stored from within at least one product tank 18 onto the ground 22 and the crops 24.

As shown in Figure 1, a plurality of drop-down applicator assemblies 38 can be positioned along the longitudinal axis 36 of the support boom 30. In particular, each applicator assembly 38 can be positioned and coupled between adjacent spray nozzles 34 to the support boom 30. Each applicator assembly 38 can be configured as a light-weight design to not overload the support boom 30.

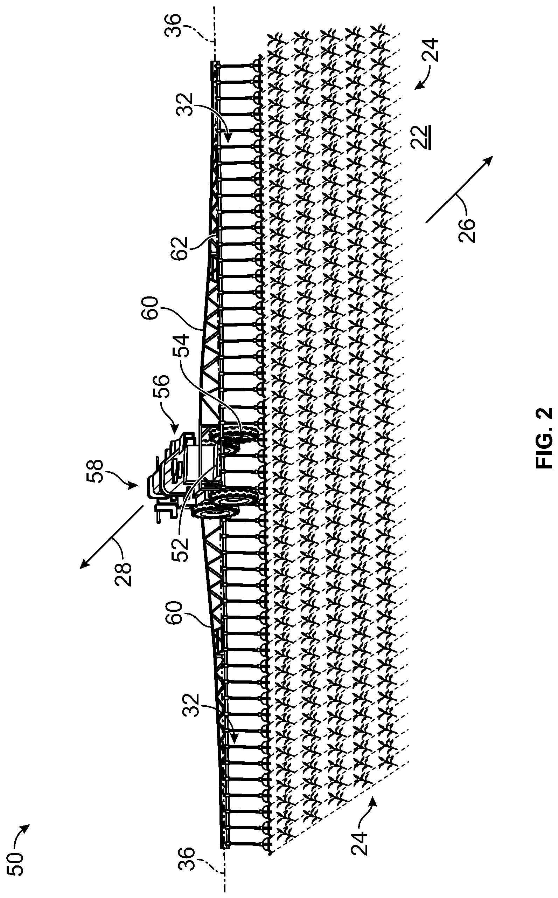

In other implementations, the support boom 30 can be positioned in front of the cab 16. In Figure 2, for example, an agricultural vehicle 50 (e.g., an agricultural sprayer 50) is shown including a chassis 52 having a plurality of traction members such as wheels 54 to support a cab 56, one or more product tanks 58, and a power unit (e.g., an engine, transmission, etc.) above an agricultural surface or ground 22. In this illustrated implementation, the ground 22 can be that of a crop field. The product tanks 58 can be configured to store agricultural product (e.g., liquid fertilizer, liquid pesticide, liquid fungicide, dry/solid forms of nutrients, dry/solid forms of protection products, agricultural seeds, etc.) to be distributed onto crops 24 growing from the ground 22 or directly onto the ground 22. The power unit can operably drive a delivery device (e.g., a pump) to dispense the agricultural product within the product tanks 58 onto the ground 22. In other implementations, the traction members can be continuous tracks operable to move the sprayer 50 relative to the ground 22.

The sprayer 50 can include a support boom 60 coupled to the chassis 52 in front of the product tanks 58 and the cab 56. In this implementation, the spray boom 60 is a front-mounted spray boom positioned forward of the cab 56 and product tanks 58. A hydraulic assembly (e.g., hydraulic cylinders) can be coupled to the chassis 52 and the support boom 60 and is operable to raise and lower the support boom 60 relative to the chassis 52 and the ground 22. Spray nozzles 34 can be positioned along a longitudinal axis 36 of the support boom 60 with each spray nozzle fluidly coupled to at least one or more of the product tanks 58. The spray nozzles can be operable to dispense/spray the agricultural product stored from within at least one product tank 58 onto the ground 22 and the crops 24.

Similar to Figure 1, a plurality of drop-down applicator assemblies 38 can be positioned along the longitudinal axis 36 of the support boom 60 of the sprayer 50. In particular, each applicator assembly 38 can be positioned and coupled to the support boom 60 or to a spray pipe 62. The spray pipe 62 can be fluidly coupled to one or more of the product tanks 58.

In other implementations of the present disclosure, a pull-behind sprayer can include a frame and traction members that support the support boom 30 above the ground 22 of an agricultural field 40 and is selectively coupled to a vehicle (e.g., a tractor) to be pulled across the agricultural field 40. In some implementations, the pull-behind sprayer can also include one or more product tanks 18.

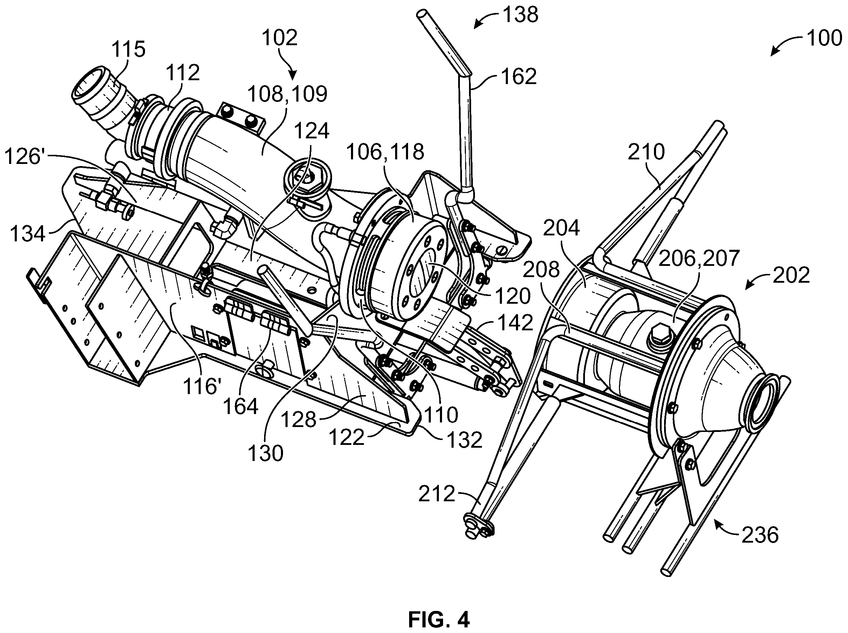

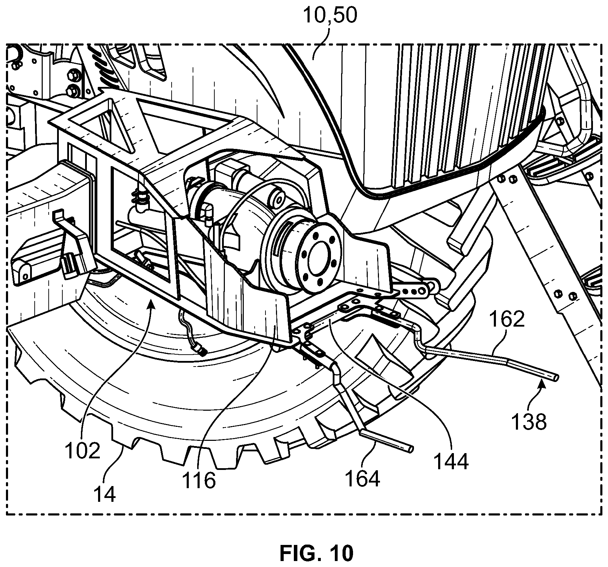

Figures 3 and 4 illustrate top perspective views of an exemplary first commodity transfer assembly 100. The commodity transfer assembly 100 can include a first connector assembly 102 and a second connector assembly 202. In certain implementations, the first connector assembly 102 is coupled, including mounted or attached, to the agricultural vehicle 10, 50, such as, for example, to the chassis 12, 52 (Figure 10), or to a retractable or foldable ladder 40 (Figure 2), while the second connector assembly 202 is coupled to a tendering vehicle, equipment, or structure. Alternatively, in other implementations, the first connector assembly 102 can be coupled to the tendering vehicle, equipment, or structure, while the second connector assembly 202 is coupled to the agricultural vehicle 10, 50.

The first connector assembly 102 can include a first transfer conduit assembly 108 having a first connector 106, the first transfer conduit assembly 108 having a first end 110 and a second end 112, and can include one or more couplings, conduits, hoses, and/or tubing, among other features. The first transfer conduit assembly 108 can also include a first valve body 109 that can house a first valve, including, for example, a poppet valve, ball valve, or plunger valve, among other types of valves. Further, the first valve can be a pneumatically, hydraulically, or electrically controlled valve that is, for example, automatically opened and closed in response to one or more signals generated by a controller of a control system. When the first connector assembly 102 is matingly coupled to the second connector assembly 202, the first valve of the first valve body 109, and thus of the first transfer conduit assembly 108, can be opened such that commodity, including a fluid, among other states of commodity delivered to the first connector assembly 102, can pass through the first connector assembly 102 for delivery to the tanks 18, 58.

The first end 110 of the first transfer conduit assembly 108 can include a first connector 106, such as, for example, a male or female connector. According to certain implementations, the first connector 106 is a male coupling having an orifice 120 through which commodity can pass through the first connector 106 and, if the first valve of the first transfer conduit assembly 108 is opened, flow through the first transfer conduit assembly 108. According to certain implementations, a seal body 118 can be positioned about at least a portion of the first connector 106, such as, for example, an outer periphery of the first connector 106. Further, for at least certain implementations, the seal body 118 is pneumatically or hydraulically inflatable so as to expand about at least an interface between the first connector 106 and a mating second connector 204 of the second connector assembly 202 in a manner that can form a seal therebetween.

According to such implementations, the activation of the seal body 118, including, for example, inflation of the seal body 118, can be triggered in a variety of manners. For example, either or both the first connector assembly 102 and the second connector assembly 202 can include proximity sensors that can provide information, such as, for example, to the controller of the control system that can indicate the first connector 106 is positioned, including correctly aligned, relative to the second connector 204, for a pneumatic, hydraulic, or electronic actuator to be activated that facilitates an inflation of the seal body 118. However, such proper positioning of the first connector 106 relative to the second connector 204 can be detected in a variety of other information, including, but not limited to, via use of information obtained by a vision system, or an identification of information provided by one or more cameras of a relative position on one or more visual markers, including April tags or QR codes, among other types of visual markers. Additionally, the state of inflation of the seal body 118, including, for example, the seal body 118 becoming generally fully inflated, can, according to certain implementations, trigger the controller to generate one or more signals to facilitate the opening of at least the first valve, among other valves (e.g., second valve of the second connector assembly 202). Alternatively, the opening of the first valve and/or the activation of an actuator to inflate the seal body 118 can be manually triggered by an operator via use of an input/output (I/O) device that may, for example, be located within the cab 16, 56 or otherwise communicatively coupled to the agricultural vehicle 10, 50 from a local or remote location. The second end 112 of the first transfer conduit assembly 108 can include, or be coupled to, a coupler 115 that is configured to be coupled to a conduit 114 (Figure 8) that is in fluid communication with one or more of the tanks 18, 58. However, as previously indicated, the ability of the commodity to reach the conduit 114 can be at least partially dependent on the first valve of the first connector assembly 102 being in an opened position.

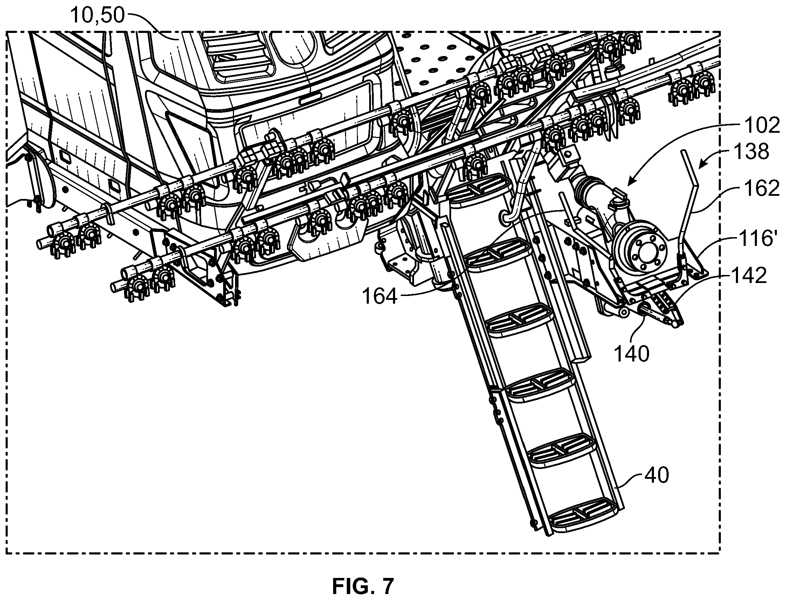

The first connector assembly 102 can also include a support assembly 116 that can be configured to at least support at least a portion of the first transfer conduit assembly 108, including the valve body 109, as well as be coupled to a flipper arm assembly 138 of the first connector assembly 102. Additionally, the support assembly 116 can be configured to couple the first connector assembly 102 directly or indirectly to the agricultural vehicle 10, 50. For example, Figures 3-6 illustrate an exemplary support assembly 116 to, for example, a retractable or foldable ladder 40 of the agricultural sprayer 50, as seen in Figure 7. While the ladder 40 is shown in Figure 7 in a lowered position, the ladder 40 can be configured to be raised, such as, for example, at least partially folded, so as to at least provide clearance between the ladder 40 and the adjacent ground 22 at least as the agricultural sprayer 50 performs an agricultural operation. The support assembly 116 can thus, according to certain implementations, being configured to be coupled to the portion of the ladder 40 that is raised so as to similarly provide ample ground clearance between the first connector assembly 102 and the ground 22.

The support assembly 116 can include a base portion 122 that provides structural support and stability to the first connector assembly 102, and can further include a first sidewall 126 and a second sidewall 128. The first sidewall 126 and the second sidewall 128 can extend from a top side of the base portion 122 to a top portion 124 of the support assembly 116, and between, the first and second ends 132, 134 of the support assembly 116. The first and second sidewalls 126, 128 can, according to certain implementations, be configured to offer lateral support and strengthening to the first connector assembly 102. Additionally, the second sidewall 128 can be configured, or otherwise be coupled to connectors, to couple the first connector assembly 102 to the agricultural vehicle 10, 50, including, for example, to the ladder 40 of the agricultural sprayer 50, among other portions of the agricultural vehicle 10, 50, including the chassis 12, 52.

The support assembly 116 can also include a front support wall 130 that can be generally perpendicular to the first and second ends 132, 134 of the support assembly 116. Further, the support assembly 116 can be positioned to at least vertically support a portion of the first transfer conduit assembly 108 at a position rearward of, and adjacent to, the seal body 118. As seen in the illustrated example, a pair of support flanges 136 at opposing ends of the front support wall 130 can extended generally forward of, or from, the front support wall 130 to the first end 132 of the support assembly 116. Further, the second sidewall 128 can, according to certain implementations, provide a portion of one of the support flanges 136.

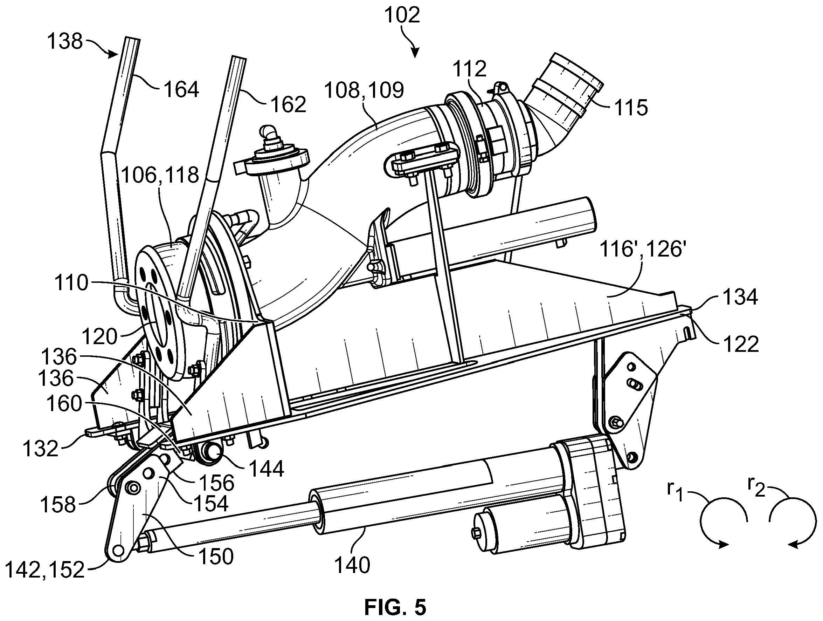

The configuration of the support assembly 116 can be at least partially based on a location at which the first connector assembly 102 will be, at least temporarily, positioned about the agricultural vehicle 10, 50. For example, as previously mentioned, as indicated by at least Figure 7, according to certain implementations, the first connector assembly 102 can be coupled to a foldable, or otherwise raiseable, portion of a ladder 40. Such a configuration can therefore be considered to have a lesser likelihood of there being occurrences of insufficient ground clearance between the first connector assembly 102 and the ground 22, as the first connector assembly 102 can be, with the ladder 40, at a raised vertical position during operation of the agricultural sprayer 50, and at a lowered position when the agricultural sprayer 50 is not traveling. As such a configuration may advert potential ground clearance issues, the support assembly 116 can be configured such that an arm actuator 140, such as, for example, a pneumatically or hydraulically actuated cylinder, of the flipper arm assembly 138 can be positioned beneath the base portion 122 of the support assembly 116, as seen in at least Figure 5. Moreover, with such an implementation, the arm actuator 140 can be positioned at a relatively central location relative to the base portion 122 and/or generally beneath, and aligned with, the first connector 106 and/or first transfer conduit assembly 108. Such a central location, and/or alignment, of the arm actuator 140 can be beneficial with respect to at least loads experienced by the first connector assembly 102 at least in connection with the first connector assembly 102 providing a force through operation of the arm actuator 140 and/or flipper arm assembly 138 in displacing the second connector assembly 202 into a coupling engagement with the first connector assembly 102.

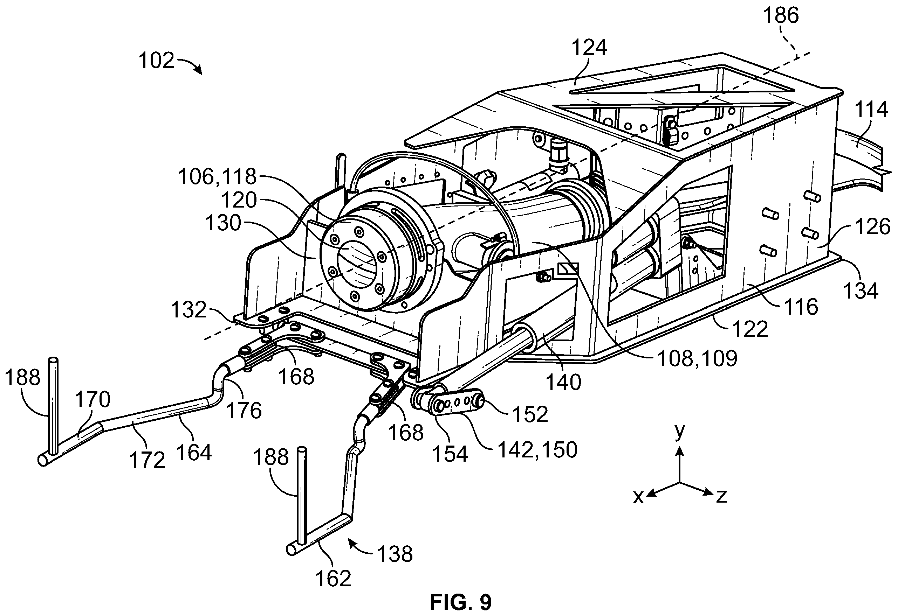

The exemplary support assembly 116 configuration depicted in at least Figure 5, however, may not be suitable for all applications or installations. For example, according to certain implementations, rather than being raised or elevated with the vertical displacement of a ladder 40, the first connector assembly 102 can be mounted at a generally static position relative to the agricultural vehicle 10, 50, including, for example, to the chassis 12, 52, as seen, for example, in at least Figure 10. While Figure 10 illustrates the first connector assembly 102 generally at or around a front end of the agricultural vehicle 10, 50, the first connector assembly 102 can, alternatively, be positioned at a rear or side portion of the chassis 12, 52, among other locations about the agricultural vehicle 10, 50. In at least situations in which the first connector assembly 102 is directly or indirectly coupled to the chassis 12, 52, ground clearance between the first connector assembly 102 and the ground 22 can potentially be of concern. Additionally, available space for the operation of the first connector assembly 102, among other considerations, may also influence the configuration of the support assembly 116. Figures 8-10 illustrate a variation of the first connector assembly 102 shown in at least Figures 5-7, and, moreover, depict the illustrated first connector assembly 102 with another exemplary support assembly 116' configuration. As seen in at least Figure 9, rather than being beneath the first transfer conduit assembly 108, including the valve body 109, the first sidewall 126' of the support assembly 116' shown in Figures 8-10 is positioned to a side of at least a portion of the first transfer conduit assembly 108 such that the first sidewall 126' and second sidewall 128 are on opposing sides of at least a portion of the first transfer conduit assembly 108. Such a configuration can accommodate the first connector assembly 102 shown in at least Figure 8 as having a lower, or more compact, profile than the version of the first connector assembly 102 shown in at least Figure 5, thereby at least assisting with addressing potential ground clearance issues. The profile of the first connector assembly 102 shown in at least Figure 9 can be further reduced by positioning the arm actuator 140 above, rather than beneath, the base portion 122 and to a side of either the first sidewall 126' or the second sidewall 128. In the example, shown in Figure 9, the arm actuator 140 can be inwardly offset of the first sidewall 126' and between the first sidewall 126' and the first transfer conduit assembly 108 such that the support assembly 116' can at least partially house, and protect, the arm actuator 140 from incidental contact with objects as the agricultural vehicle 10, 50 travels along the field. The support assembly 116' can further include a top portion 124' in the form of an at least partially enclosed wall(s) that can extend between the first sidewall 126' and the second sidewall 128.

The first end 132 of the support assembly 116, 116' can be pivotally coupled to a rock shaft 144 of the flipper arm assembly 138, the rock shaft 144 extending, between opposing first and second ends 146, 148 of the rock shaft 144, about, including, for example, in front, of the support assembly 116, 116' in a direction that is generally perpendicular to the forward direction 26. According to certain implementations, the rock shaft 144 can be rotatably coupled to the base portion 122. Additionally, the rock shaft 144 can be coupled to the arm actuator 140 such that operation of the arm actuator 140, including an extension or retraction of the arm actuator 140, can rotate the rock shaft 144 relative to at least the base portion 122. The rock shaft 144 can be directly or indirectly coupled to the arm actuator 140 in a variety of manners, including, for example, via a link assembly 142.

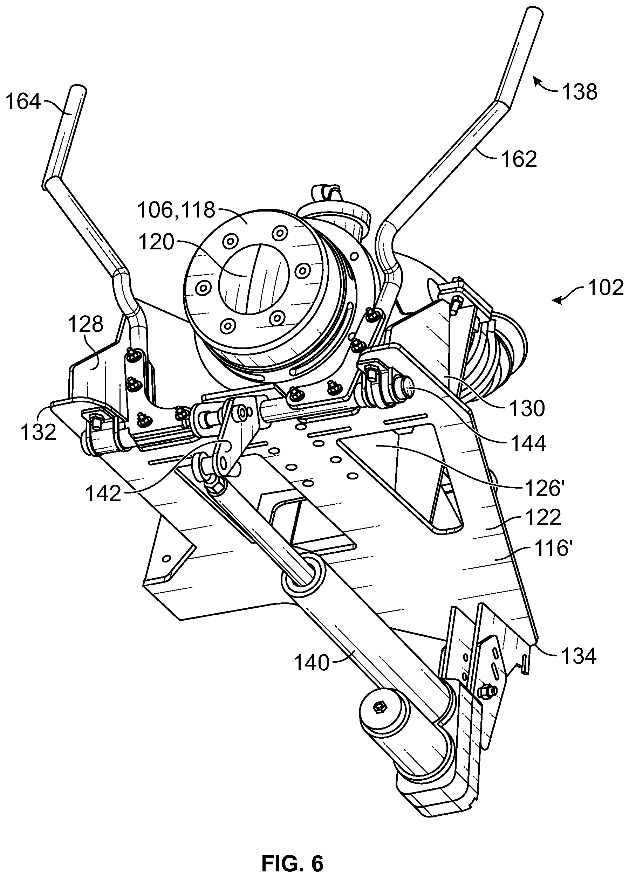

The location of the link assembly 142 can vary for different implementations, including with respect to the configuration of the support assembly 116, 116' and the associated location of the arm actuator 140. For example, as shown by at least Figure 6, with respect to the support assembly 116 configuration in which the arm actuator 140 is positioned at a central location beneath the base portion 122 and generally aligned with the first transfer conduit assembly 108, the link assembly 142 can be coupled to the rock shaft 144 at a generally central location between the first end 146 and the second end 148 of the rock shaft 144. According to such an implementation, the link assembly 142 can include one or more first links 150 and one or more second links 156, the first link 150 being pivotally coupled to an end of the arm actuator 140 around a first end 152 of the first link 150, and the first link 150 further being pivotally coupled to the second link 156 at, or around, a second end 154 of the first link 150. The second link 156 can similarly be pivotally coupled to the first link 150 at or around a first end 158 of the second link 156, as well as coupled to the rock shaft 144 at or around a second end 160 of the second link 156. Alternatively, as seen in at least Figure 9, according other implementations, the link assembly 142 can include one or more of the first links 150, with the first end 152 of the first link 150 coupled to an end of the arm actuator 140, and the second end 154 being coupled to the adjacent first end 146 of the rock shaft 144.

As seen in at least Figure 11, the flipper arm assembly 138 can further include one or more, if not a plurality, of flipper arms 162, 164 that are coupled to the rock shaft 144 by one or more brackets 178. In the illustrated implementation, the bracket 178 can generally include a pair of L-shaped brackets having a first segment 180 that is coupled to the adjacent first or second flipper arm 162, 164, and a second segment 182 that is coupled to a body portion 184 of the rock shaft 144,

The flipper arm assembly 138, can, according to certain implementations, include a first flipper arm 162 and a second flipper arm 164, the first flipper arm 162 and the second flipper arm 164 being generally coupled to, or around, opposing ends 146, 148 of the rock shaft 144. The flipper arms 162, 164 are configured to be selectively rotated with the rotation of the rock shaft 144 in response to an actuation of the arm actuator 140, including, for example, an extension or retraction of a piston rod of the arm actuator 140. Moreover, the flipper arms 162, 164 are configured to be rotated in a first direction (as generally indicated by the direction "r₁" in Figure 5) from a first, retracted position, as seen in at least Figure 5, to a second, extended position, as seen in at least Figure 9. Similarly, the flipper arms 162, 164 are configured to also be selectively rotated in a second direction (as generally indicated by the direction "r₂" in Figure 5) from the second, extended position to the first, retracted position.

Referencing Figures 11, 12, and 13, the first flipper arm 162 and second flipper arm 164 can be, generally, mirror images of each other at least about a central longitudinal axis 186 of the flipper arm assembly 138, and thus can include similar features. The first and second flipper arms 162, 164 can each possess opposing first and second ends 166, 168, the second end 168 being closer to the rock shaft 144 than the first end 166. The first and second flipper arms 162, 164 can further include a first section 170, second section 172, and third section 174, the first section 170 being between the first end 166 and the second section 172, the second section 172 being between the first section 170 and the third section 174, and the third section 174 being between the second section 172 and the second end 168. Additionally, each of the first and second flipper arms 162, 164 can include a catch 176 positioned, and/or configured to provide a transition, between the second section 172 and the third section 174.

As the first and second flipper arms 162, 164 extend longitudinally (e.g., "x" direction in Figure 11) in a direction generally from the first end 166 of the first and second flipper arms 162, 164 toward the rock shaft 144, a lateral width (e.g., "z" direction in Figure 11 and the illustrated first width ("w₁") and second width ("w₂") in Figure 11) between the first and second flipper arms 162, 164 can decrease. Moreover, the first and second flipper arms 162, 164 can, as the first and second flipper arms 162, 164 extend longitudinally generally toward the rock shaft 144, converge such that an opening 171 defined by, and extending between, the first and second flipper arms 162, 164 reduces in width as the first and second flipper arms 162, 164 get closer to the rock shaft 144. While such a configuration of the first and second flipper arms 162, 164 can generally result in the opening 171 generally being a V-shaped opening, the extent or degree at which one or more of the first section 170, second section 172, and third section 174 of each first flipper arm 162, second flipper arm 164 inwardly converges may not be the same. For example, as seen in Figure 11, the second section 172 of the first flipper arm 162 and second flipper arm 164 can inwardly laterally converge to a larger extent than at least one, if not both, of the lateral convergences between the opposing first sections 170 and third sections 174 of the first and second flipper arms 162, 164.

Such an inwardly converging configuration of the opening 171 provided by the first and second flipper arms 162, 164 can accommodate a degree of lateral misalignment between the first connector assembly 102 and the second connector assembly 202 during the coupling process. Moreover, the wider portion of the opening 171 that extends laterally across the opposing first ends 166 of the first and second flipper arms 162, 164 can be configured to accommodate at least a certain degree of lateral misalignment between the first and second connector assemblies 102, 202 at least at the onset of the coupling process. As, during rotation of the arm assembly 138, the second connector assembly 202 slides via use of at least a gravitational force along the first and second flipper arms 162, 164 generally toward at least the first connector 106 of the first connector assembly 102, the converging configuration of the first and second flipper arms 162, 164 can generally bring the second connector 204 of the second connector assembly 202 into lateral alignment with the central axis 186. Moreover, at least during the rotation of the flipper arm assembly 138, the central axis 186 can intersect, if not be moved into alignment with, a central longitudinal axis of the first connector 106 of the first connector assembly 102. As seen in at least Figures 10 and 12, the first and second section 170, 172 of the first and second flipper arms 162, 164 can have different angular orientations with respect to at least the vertical direction (as generally indicated, for example, by the "y" direction in Figure 12). Such variations in angular orientations can at least assist in the first end 166 and/or first section 170 of the first and second flipper arms 162, 164 being positioned, when the flipper arm assembly 138 is in the second position (as shown in Figures 8 and 10) being positioned below an adjacent wing assembly 210, 212 (Figure 14) of the second connector assembly 202. Such differences in angular orientations between the first and second sections 170, 172 can, for example, be configured to at least assist in accommodating for potential differences in elevation or vertical heights between the first and second connector assemblies 102, 202, when, in preparation for a coupling procedure, the flipper arm assembly 138 is in the second position and the agricultural vehicle 10, 50 and/or a tendering vehicle is/are propelled so that the first and second sections 170, 172 to come into closer proximity to each other.

As also seen in at least Figure 12, the second section 172 and the third section 174 of either or both the first flipper arm 162 and second flipper arm 164 can be vertically offset from each other generally in the vertical direction (as generally indicated, for example, by the "y" axis in Figure 12). Such vertical offsetting between the second section 172 and the third section 174 can be provided by the catch 176. As previously mentioned, the catch 176 can be configured to limit the distance the second connector assembly 202 can slide down the flipper arms 162, 164, including, for example, to prevent the second connector assembly 202 from sliding completely down the flipper arms 162, 164. The catch 176 can further be configured, including located along the flipper arms 162, 164, such that the downwardly sliding displacement of the second connector assembly 202 along the flipper arms 162, 164 stops at a location at which the position of the second connector assembly 202 relative to the first connector assembly 102 will not create an interference with the continued rotational displacement of the second connector assembly 202 as the flipper arm assembly 138 continues to be rotated about the rock shaft 144 toward the first position.

With the second connector assembly 202 secured at the catch 176, the continued rotation of the flipper arm assembly 138 toward the first position can raise the second connector assembly 202. Further, with the second connector assembly 202 in the catch 176, the continued rotation of the flipper arm assembly 138 toward the first position can facilitate the first and second flipper arms 162, 164 exerting a force against a portion of an adjacent wing assembly 210, 212 of the second connector assembly 202 that can push or pull the second connector assembly 202 toward the first connector assembly 102. Such pushing or pulling of the second connector assembly 202 can facilitate the second connector 204 of the second connector assembly 202 moving into a position at which the second connector 204 can matingly engage the first connector 106 of the first connector assembly 102. For example, according to implementations in which the first connector 106 is a male connector, the first connector 106 can, as the second connector assembly 202 is pushed or pulled by the flipper arm assembly 138, be received into the mating female second connector 204. With the first connector 106 matingly engaged with the second connector 204, the rotation of the flipper arm assembly 138 can be stopped. According to certain implementations, with the first connector 106 matingly engaged with the second connector 204, the flipper arm assembly 138 can actively or passively provide a force against the second connector assembly 202 that can prevent inadvertent disconnection between the first connector assembly 102 and second connector assembly 202. Further, with the first connector 106 matingly engaged with the second connector 204, the seal body 118 can be inflated and the valves of the valve bodies 109, 207 opened to accommodate the transfer of the commodity, as previously discussed.

As seen in Figure 9, optionally, according to certain implementations, the flipper arm assembly 138 can further include a finger portion 188 that can upwardly vertically extend from the first section 170 of one or more of the first flipper arm 162 and/or second flipper arm 164 in a direction that can be generally perpendicular to the first section 170. The finger portion 188 can be utilized to provide a reference size that can be used by an operator or vision system in connection with determining, including estimating, a distance between the first connector assembly 102 and/or agricultural vehicle 10, 50 and the mating second connector assembly 202. Additionally, or alternatively, the finger portion 188 can also provide a visual indicator to the operator or a vision system as to potential elevation or height differences between the first connector assembly 102 and the second connector assembly 202.

Figures 14, 15, and 16 illustrate an exemplary second connector assembly 202. According to certain implementations, the second connector assembly 202 can be mounted on a movable arm connected to the tendering vehicle, equipment, or structure. Such movable features of the second connector assembly 202 can facilitate the second connector assembly 202 being movable away from a home position at which the second connector assembly 202 can, at least temporarily, be seated in a nest 240 (Figure 8) to be aligned with, and subsequently be matingly coupled to, the first connector assembly 102, as previously discussed.

The second connector assembly 202 can include a second transfer conduit assembly 206, which can include, for example, a valve body 207 having a second valve, such as, for example, a poppet valve, ball valve, or plunger valve, among other types of valves. In certain implementations, the second transfer conduit assembly 206 can further include one or more hoses, tubs, fitting, couplings, and/or connectors that can provide, when the second valve is open, a conduit for the commodity to flow through the second connector assembly 202, such as during the transfer of the commodity to the first connector assembly 102. The second transfer conduit assembly 206 can extend between opposing first and second ends 203, 205 of the second transfer conduit assembly 206, and can further include the second connector 204, which can be located at the first end 203 of the second transfer conduit assembly 206. The second end 205 of the second transfer conduit assembly 206 can include, or have a configuration that provides, a coupling that is configured to be connected to a hose or other conduit through which commodity from the tendering vehicle can be delivered to the second connector assembly 202. The second transfer conduit assembly 206 can be at least partially enclosed within a housing 208. In certain implementations, the housing 208 can be configured as a cage that extends along, or be positioned adjacent to, at least portions of the second transfer conduit assembly 206. For example, the housing 208 can comprise a front flange 216 and an opposing rear flange 218, the front flange 216 being generally located at, or adjacent to, the first end 203 of the second transfer conduit assembly 206, and the rear flange 218 being generally located at, or adjacent to, the second end 205 of the second transfer conduit assembly 206. The housing 208 can further comprise a plurality of braces 214 that extend longitudinally between the front and rear flanges 216, 218.

The second connector assembly 202 can also include one or more wing assemblies, such as, for example, a first wing assembly 210 and a second wing assembly 212. According to the illustrated implementation, the first and second wing assemblies 210, 212 can laterally extend from opposite sides of the second transfer conduit assembly 206 or associated housing 208. While the illustrated implementation depicts the first and second wing assemblies 210, 212 as being separate assemblies, in other implementations, the wing assemblies 210, 212 can be, at least partially, part of the same wing assembly.

According to the illustrated implementation, each of the first and second wing assemblies 210, 212 can include an upper wing 220 and a lower wing 222. The upper wing 220 can include an inner wing portion 224 that is coupled, at a first end 228 of the upper wing 220, to the rear flange 218, and longitudinally extends along the housing 208 to a transition that couples the inner wing portion 224 to an outer wing portion 226 of the upper wing 220. According to certain implementations, the inner wing portion 224 can be coupled to an adjacent brace 214 of the housing 208. The outer wing portion 226 of the upper wing 220 can extend away from the housing 208 to a second end 230 of the upper wing 220. As seen in at least Figure 15, according to certain implementations, the outer wing portion 226 can also be angularly offset in the fore-aft direction as the outer wing portion 226 extends toward the second end 230 of the upper wing 220.

Each of the first and second wing assemblies 210, 212 can include a lower wing 222 positioned beneath the upper wing 220. The lower wing 222 can laterally extend outwardly from a first end 235 of the lower wing 222, which can be coupled to an adjacent brace 214 of the housing 208, to a second end 237 of the lower wing 222. According to certain implementations, each lower wing 222 can extend outwardly from the housing 208 in a direction that is generally perpendicular to a direction in which the second connector assembly 202 is pushed or pulled by the flipper arm assembly 138 to a connection position at which the second connector 204 is matingly engaged with the first connector 106. Additionally, the lower wing 222 can be configured to be engaged by, and slide along, an adjacent first or second flipper arm 162, 164 during the coupling process. For example, in certain implementations, the lower wing 222 has a base portion 232 that can provide a rod or bar that can slide against an adjacent flipper arm 162, 164 during the coupling process, including during the rotational displacement of the flipper arm assembly 138, as discussed above. Alternatively, in other implementations, the lower wing 222 can include one or more roller bodies 234 that are positioned to engage an adjacent flipper arm 162, 164 during the coupling process, with the roller bodies 234 being configured to rotate about the base portion 232. Such rotation of the roller bodies 234 about the base portion 232, rather than the sliding of the base portion 232, as the lower wing 222 moves along the adjacent flipper arm 162, 164, can at least assist in preventing or reducing wear on the lower wing 222 and/or flipper arms 162, 164 during the coupling processes.

As seen in at least Figure 16, the housing 208 can also include, or be coupled to, a support assembly 236. The support assembly 236 can be configured to at least assist with guiding the second connector assembly 202 back into engagement, including, for example, a sitting engagement, with the nest 240 at least during the decoupling process. For example, according to certain implementations, at least upon the second connector assembly 202 being disconnected from the first connector assembly 102, the support assembly 236 can engage a ramp 238 (Figure 8) along which the support assembly 236 can downwardly slide until the second connector assembly 202 is received by, and seated in, the nest 240.

The commodity transfer assembly 100 can also include a control system configured to automatically manage the coupling and decoupling processes based on preset parameters and/or operator input. Such a control system, which can include, for example, at least one controller having one or more processors and associated memory devices, can utilize information provided by one or more sensors, including, for example, ultrasonic or vision systems and/or proximity sensors, among other sensors, to determine the relative positions of the first connector assembly 102 and the second connector assembly 202. Such a control system can further be configured to control the operation of the first and second valves and arm actuator 140. Such sensors can also provide feedback to the control system to ensure proper alignment between the first connector assembly 102 and the second connector assembly 202 before a connection is attempted to be established between the first connector 106 and second connector 204, before the control system activates an actuator to inflate the seal body 118, and/or before either or both the first and second valves are opened. Additionally, such a control system can determine when the transfer of the commodity to at least the tanks 18, 58 is to cease, and thus when either or both the first and second valves are to be closed, and/or when the decoupling process is to commence.

Figures 17-20 illustrate a perspective view of another exemplary commodity transfer assembly 300 configured to linearly push or pull a second connector assembly 402 toward, and into mating engagement with, a first connector assembly 302.

The illustrated first connector assembly 302 can include a first transfer conduit assembly 306 having a first, female connector 304, an orifice 316 of the female connector 304 being positioned at a first end 308 of the first transfer conduit assembly 306. The first transfer conduit assembly 306 can also include a valve body 307 having a valve, such as, for example, a poppet valve, ball valve, or plunger valve, among other types of valves. According to certain implementations, the first connector 304 can also include, or be coupled to, a seal body 314 in, or around, the orifice 316 that can assist in forming a seal between the first connector 304 and a second connector 412 of the second connector assembly 402 when the second connector 412 is matingly positioned within the orifice 316. Additionally, like the first connector assembly 102, a second end 310 of the first transfer conduit assembly 306 can be configured for coupling with the conduit 114.

The support assembly 312 of the first connector assembly 302 can include one or more support walls 318 that can couple the first transfer conduit assembly 306 to a support arm 320 of the support assembly 312. The support assembly 312 can further include a support actuator 322. In the illustrated implementation, the support actuator 322 is a pneumatically or hydraulically actuated cylinder having an end of the support actuator 322 pivotally coupled to the support arm 320 by a support bracket 326. Additionally, another end of the support actuator 322 can be pivotally coupled to an attachment body 324 that can be coupled to the agricultural vehicle 10, 50, such as, for example, to the chassis 12, 52 and/or ladder 40. In this configuration, selective operation of the support actuator 322 can facilitate selective rotational displacement of the first connector assembly 302 relative to at least the attachment body 324, such as, for example, from a first, home position to a second, extended position. In certain implementations, the first, home position can correspond to the first connector assembly 302 being in one of a downward or upward position that can minimize the extent the first connector assembly 302 longitudinally extends from the agricultural vehicle 10, 50, and the second position can be a position at which the first connector assembly 302 longitudinally extends outwardly from the agricultural vehicle 10, 50.

The first connector assembly 302 can further include an arm assembly 328 that can have telescopically arranged first and second legs 330, 332. The second leg 332 can be coupled to the first transfer conduit assembly 306 and/or support assembly 312, such as, for example, by one or more of the support walls 318, thereby allowing the arm assembly 328 to also be pivotally displaced with other portions of the first connector assembly 302 in response to actuation of the support actuator 322.

The arm assembly 328 can also include an arm actuator 334, such as a pneumatic or hydraulic cylinder. One end of the arm actuator 334 can be coupled to the second leg 332, for instance via a first bracket 336, while the opposing end of the arm actuator 334 can be coupled to the first leg 330, such as, for example, to a second end 342 of the first leg 330 via a second bracket 338. In this configuration, actuation of the arm actuator 334 can facilitate a linear displacement of the first leg 330 relative to the second leg 332. Moreover, such linear displacement can adjust at least a linear distance between a first end 340 of the first leg 330 and the first connector 304. The arm assembly 328 can further include a flange body 343 that can be coupled to the first leg 330 at or around the first end 340 of the first leg 330. During at least the early stages of the coupling process, the flange body 343 can be displaced to a position at which the flange body 343 is behind, and eventually abuts, a portion of the second connector assembly 402 in a manner that can push or pull the second connector assembly 402 into a mating engagement with the first connector assembly 302. According to certain implementations, the flange body 343 can include a pair of opposing first and second arms 344, 346, each having an inner and an outer wall 348, 350. The inner walls 348 of the opposing first and second arms 344, 346 can be configured to generally define generally continuous first and second apertures 352, 354 of the flange body 343 that are situated between the first and second arms 344, 346. As illustrated in Figure 18, the first aperture 352 can have a generally V-shaped configuration, which can generally converge from a broader opening at an open end of the flange body 343 or first aperture 352 in the direction of the second aperture 354. Such a converging configuration can be analogous to the previously discussed configuration of the flipper arm assembly 138 and, moreover, can be sized to accommodate a degree of lateral misalignment between the first and second connector assemblies 302, 402.

The second aperture 354 can have a shape that, at least relative to the first aperture 352, closely aligns with the configuration of the mating portion of the second connector assembly 402 that is intended to be situated within the second aperture 354. Further, as depicted in at least Figure 18, the second aperture 354 can be configured to allow at least a portion of the second connector assembly 402 to rest against, or otherwise engage, at least a section of the adjacent inner walls 348 of either or both the first and second arms 344, 346. Additionally, the flange body 343 can be characterized by opposing front and rear sides 358, 360, with the front side 358 being configured to abut an adjacent portion of the second connector assembly 402 during the coupling process. The flange body 343 can also incorporate a support flange 356, which can extend outwardly from the rear side 360 of the flange body 343, and can be configured to provide structural support and enhance the rigidity of the flange body 343.

Similar to the second connector assembly 202 discussed above, the second connector assembly 402 shown in at least Figures 19 and 20 can be coupled to the tendering vehicle. The second connector assembly 202 can include a second transfer conduit assembly 404 having a second transfer valve 406, the second transfer valve 406 having a second valve, such as, for example, a poppet valve, ball valve, or plunger valve, among other types of valves. The second transfer conduit 404 can extend between opposing first and second ends 408, 410 of the second transfer conduit assembly 404, with the second connector 412, such as, for example, a male connector, being positioned at the first end 408 of the second transfer conduit assembly 404. The second connector assembly 402 can also include a connector flange 414 having opposed first and second sides 416, 418, with the second side 418 of the connector flange 414 configured for abutting engagement with the flange body 343 of the first connector assembly 302 at least during the coupling process.

During a coupling process involving the commodity transfer assembly 300, either or both the agricultural vehicle 10, 50 and the tendering vehicle 50 can be moved into position, including general alignment with each other, such that the process for coupling the first and second connector assemblies 302, 402 can commence. A determination, including an estimation, of the first and second connector assemblies 302, 402 being properly positioned, including generally aligned, for commencement of the coupling process can be made in a variety of different manners. For example, a determination of the first and second connector assemblies 302, 402 being properly positioned for commencement of the coupling process can be made, for example, via a determination by an operator or from information provided by one or more sensors to a control system. In connection with commencement of the coupling process, the support actuator 322 can be activated such that when the first connector assembly 302 is pivotally displaced to the second position, at least the flange body 343 of the first connector assembly 302 is linearly behind the connector flange 414 of the second connector assembly 402. Therefore, according to certain implementations, in connection with the actuation of the support actuator 322 rotating the first connector assembly 302 to the second position, the arm actuator 334 can also be actuated to linearly outwardly extend the first leg 330 relative to at least the first connector 304. Thus, as the first connector assembly 302 is rotated, the leg 330 can be outwardly linearly extended relative to at least the first connector 304 such that a portion of the second transfer conduit assembly 404 positioned behind the connector flange 414 is received into the first aperture 352. As the first connector assembly 302 is continued to be rotated the portion of the second transfer conduit assembly 404 positioned in the first aperture 352 can, if necessary, engage an inner wall 348 to be moved into closer alignment with at least the first connector 304 before the second transfer conduit assembly 404 is received into the second aperture 354 of the flange body 343.

With the second transfer conduit assembly 404 positioned in the second aperture 354 of the flange body 343, and the flange body 343 positioned behind the connector flange 414, the arm actuator 334 can be actuated to inwardly retract the first leg 330 toward the first connector 304 of the first connector assembly 302. To the extent the flange body 343 is not already abutting the connector flange 414, such displacement of the first leg 330 can facilitate the front side 358 of the flange body 343 coming into contact with the rear side 418 of the connector flange 414 such that the continued inward linear displacement of the flange body 343 can push or pull the second connector assembly 402, and moreover, the second connector 412 toward the first connector 304 of the first connector assembly 302. Further, the arm actuator 334 can continue to be actuated at least until a mating engagement is established between the second connector 412 and the first connector 304. According to certain implementations, upon attaining such a mating engagement, optionally, the seal body 314 can be activated, and the first and second valves of the first transfer conduit assembly 306 and second transfer conduit assembly 404, respectively, can be opened. A transfer of commodity can then commence.

Upon completion of the commodity transfer, the first and second valves of the first transfer conduit assembly 306 and second transfer conduit assembly 404, respectively, can be closed and, if pertinent, the seal body 314 can be deactivated. Optionally, the arm actuator 334 can then be activated to displace the flange body 343 away from the connector flange 414 and, moreover, disengage the flange body 343 from the connector flange 414. Additionally, the support actuator 322 can be actuated to rotate the first connector assembly 302 away from the second position and/or the second connector assembly 402, and toward the first position. Either or both the agricultural vehicle 10, 50 and the tendering vehicle can then be propelled to physically separate the first and second connectors 304, 412. Alternatively, according to certain implementations, the flange body 343 can be coupled to the connector flange 414 such that, upon extension of the first leg 330, the flange body 343 can push or pull on the connector flange 414 in a manner that can separate the second connector 412 from the first connector 304.

## Claims

1. A commodity transfer system (100) for an agricultural vehicle (10, 50), the commodity transfer system (100) configured for a transfer of a commodity for an agricultural operation performed by the agricultural vehicle (10, 50), the commodity transfer system (100) comprising a first connector assembly (102), the first connector assembly (102) comprising:
a first transfer conduit assembly (108) comprising a first connector (106) and a first valve (109), the first connector (106) being in fluid communication with the first valve (109);
a support assembly (116) configured to support the first transfer conduit assembly (108) and couple the first connector assembly (102) to the agricultural vehicle (10, 50); and
a flipper arm assembly (138) comprising a rock shaft (144), a first flipper arm (162), a second flipper arm (164), and an arm actuator (140), the rock shaft (144) being rotatably coupled to the support assembly (116) for selective rotation of the rock shaft (144) in response to an actuation of the arm actuator (140),
the first and second flipper arms (162, 164) each having a first end (166) and a second end (168) and defining an opening (171) therebetween, a lateral width of the opening (171) converging in a direction from the first end (166) to the second end (168), the second end (168) being in closer proximity to the first connector (106) than the first end (166), the first and second flipper arms (162, 164) each being rotatably displaceable with the selective rotation of the rock shaft (144), wherein at least one of the first and second flipper arms (162, 164) includes a catch (176).

2. The commodity transfer system (100) of claim 1, wherein the rock shaft (144) is rotatably coupled to the support assembly (116) for rotation of the rock shaft (144) about a longitudinal axis of the rock shaft (144) that extends in a direction that is perpendicular to a central longitudinal axis (186) of the first connector (106).

3. The commodity transfer system (100) of claim 1 or 2, wherein the rock shaft (144) is coupled around a front end (132) of the support assembly (116).

4. The commodity transfer system (100) of one of the claims 1 to 3, wherein the first transfer conduit assembly (108) further comprises an inflatable seal body (118) positioned about at least a portion of the first connector (106).

5. The commodity transfer system (100) of one of the claims 1 to 4, wherein the arm actuator (140) is positioned beneath a base portion (122) of the support assembly (116).

6. The commodity transfer system (100) of one of the claims 1 to 5, wherein the support assembly (116) is configured to be coupled to a ladder (40) of the agricultural vehicle (10, 50).

7. The commodity transfer system (100) of one of the claims 1 to 6, wherein the arm actuator (140) is positioned within the support assembly (116').

8. The commodity transfer system (100) of one of the claims 1 to 7, wherein the first and second flipper arms (162, 164) each include the catch (176) and further comprise a first section (170), a second section (172), and a third section (174), the first section (170) positioned between the first end (166) and the second section (172), the second section (172) positioned between the first section (170) and the catch (176), and the third section (174) positioned between the catch (176) and the second end (168).

9. The commodity transfer system (100) of one of the claims 1 to 8, wherein the first section (170) is angularly offset from the second section (172) in both a vertical direction and a lateral direction.

10. The commodity transfer system (100) of one of the claims 1 to 9, further comprising a second connector assembly (202), the second connector assembly (202) comprising:
a second transfer conduit assembly (206) comprising a second connector (204) and a second valve (207), the second connector (204) being in fluid communication with the second valve (207) and configured for selective mating engagement with the first connector (106); and
a wing assembly (210, 212) coupled to the second transfer conduit assembly (206) and configured for selective sliding engagement with the first and second flipper arms (162, 164), the flipper arm assembly (138) configured to be rotatably displaced from a second position at which a portion of the first and second flipper arms (162, 164) are vertically beneath at least a portion of the wing assembly (210, 212), to a first position at which the second connector (204) is matingly coupled to the first connector (106), the wing assembly (210, 212) configured to be at least downwardly displaced along the first and second flipper arms (162, 164), until the wing assembly (210, 212) engages the catch (176), as the flipper arm assembly (138) is rotatably displaced toward the first position.

11. The commodity transfer system (100) of claim 10, wherein the flipper arm assembly (138) is configured to at least lift the second connector assembly (202) as the flipper arm assembly (138) is displaced toward the first position while the wing assembly (210, 212) engages the catch (176).

12. The commodity transfer system (100) of claim 10 or 11, wherein the flipper arm assembly (138) is further configured to either push or pull the second connector (204) while the wing assembly (210, 212) engages the catch (176).

13. The commodity transfer system (100) of one of the claims 10 to 12, wherein the wing assembly (210, 212) is configured to be slidingly displaced along the first and second flipper arms (162, 164) as the flipper arm assembly (138) is rotatably displaced toward the first position before the wing assembly (210, 212) engages the catch (176).

14. The commodity transfer system (100) of one of the claims 10 to 13, wherein the wing assembly (210, 212) includes one or more roller bodies (234) configured to roll along the first and second flipper arms (162, 164) as the wing assembly (210, 212) is downwardly displaced along the first and second flipper arms (162, 164) before the wing assembly (210, 212) engages the catch (176).

15. A method of operating a commodity transfer system (100), the method comprising a commodity transfer system (100) according to one of the claims 10 to 14, the method further comprising:
rotatably displacing, when the first flipper arm (162) and the second flipper arm (164) of the first connector assembly (102) are positioned beneath at least a portion of the wing assembly (210, 212) of the second connector assembly (202), the first and second flipper arms (162, 164) in a first direction at least into engagement with the wing assembly (210, 212);
displacing, with the first and second flipper arms (162, 164) engaged with the wing assembly (210, 212), the second connector assembly (202) away from a home position as the first and second flipper arms (162, 164) are rotatably displaced in the first direction;
laterally adjusting, by a downward displacement of the second connector assembly (202) along the first and second flipper arms (162, 164) during the rotatable displacement of the first and second flipper arms (162, 164) in the first direction, an alignment between a first connector (106) of the first connector assembly (102) and a second connector (204) of the second connector assembly (202);
catching the wing assembly (210, 212), as the first and second flipper arms (162, 164) continue being rotatably displaced in the first direction, in the catch (176) of at least one of the first and second flipper arms (162, 164); and
pushing or pulling, while the wing assembly (210, 212) is caught in the catch (176), the second connector (204) into a mating engagement with the first connector (106).
